(19) Europäisches Patentamt
European Patent Office
Office européen des brevets

(11) **EP 4 699 851 A1**

(12) **EUROPEAN PATENT APPLICATION**
published in accordance with Art. 153(4) EPC

(43) Date of publication:
**25.02.2026 Bulletin 2026/09**

(21) Application number: **25793713.6**

(22) Date of filing: **18.04.2025**

(51) International Patent Classification (IPC):
**B60L 15/20** *(2006.01)*

(52) Cooperative Patent Classification (CPC):
Y02T 10/72

(86) International application number:
**PCT/CN2025/089900**

(87) International publication number:
**WO 2025/223327 (30.10.2025 Gazette 2025/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.04.2024  CN 202410485790**

(71) Applicant: **Chery Automobile Co., Ltd.
Wuhu, Anhui 241006 (CN)**

(72) Inventors:
• **ZHAO, Ya**
  **Wuhu, Anhui 241006 (CN)**
• **CUI, Junbo**
  **Wuhu, Anhui 241006 (CN)**
• **CHEN, Guangdong**
  **Wuhu, Anhui 241006 (CN)**

(74) Representative: **Yang, Shu
Withers & Rogers LLP
2 London Bridge
London SE1 9RA (GB)**

(54) **VEHICLE TORQUE CONTROL METHOD, APPARATUS, DEVICE, AND VEHICLE**

(57)    A vehicle torque control method, comprising: during the driving process of an electric vehicle, acquiring the actual output torque value of the electric vehicle at a first moment; calculating the difference between the actual output torque value and a limit torque value of the electric vehicle; determining a torque adjustment gradient value on the basis of the difference; and adjusting the actual output torque value of the electric vehicle at the first moment on the basis of the torque adjustment gradient value to obtain a driving demand torque value of the electric vehicle at a second moment, wherein the second moment is later than the first moment and is adjacent to the first moment. The method can reduce the duration and frequency of continuous vibrations of electric vehicles, thereby improving the driving experience of electric vehicles. Also disclosed are an apparatus, a computer device, a vehicle, a computer readable storage medium, and a computer program product.

Acquiring, during driving of an electric vehicle, an actual output torque value of the electric vehicle at a first moment — 601

Calculating a difference between the actual output torque value and a limited torque value of the electric vehicle — 602

Determining a torque adjustment gradient value based on the difference — 603

Acquiring a demanded driving torque value of the electric vehicle at the second moment by adjusting the actual output torque value of the electric vehicle at the first moment based on the torque adjustment gradient value, wherein the second moment is later than and adjacent to the first moment — 604

**FIG. 6**

**Description**

The present disclosure claims priority to Chinese Patent Application No. 202410485790.0, filed on April 22, 2024, and entitled "VEHICLE TORQUE CONTROL METHOD AND APPARATUS", the entire disclosure of which is incorporated herein by reference.

**TECHNICAL FIELD**

The present disclosure relates to the technical field of electric vehicles, and in particular, relates to a vehicle torque control method and apparatus, a device, and a vehicle.

**BACKGROUND**

Vehicle torque refers to the moment of force output from the crankshaft during engine operation. In simple terms, it represents the magnitude of force produced by the engine with each revolution. Higher vehicle torque indicates a greater engine output force. During vehicle operation, under specific conditions (such as acceleration or deceleration), torque filtering methods are employed to control the vehicle torque, thereby ensuring smooth driving.

In related art, when the actual output torque of the vehicle approaches or exceeds the limited torque value, a single torque filtering coefficient is applied to reduce the demanded driving torque of the vehicle. This results in a decrease in the actual output torque of the vehicle, leading to fluctuations in the wheel speed. Since a certain correlation exists between the wheel speed and the limited torque value of the vehicle, such fluctuations in the wheel speed, in turn, affect the limited torque value of the vehicle. This ultimately causes persistent vehicle vibration, resulting in compromised vehicle smoothness and diminished driving experience.

**SUMMARY**

An objective of embodiments of the present disclosure is to provide a vehicle torque control method and apparatus, a device, and a vehicle, which solve the problem of persistent vehicle vibration that occurs when the actual output torque of the vehicle is limited by the allowable limited torque value of the vehicle in the related art.

To solve the above technical problem, the present disclosure provides the following technical solutions:

In a first aspect, some embodiments of the present disclosure provide a vehicle torque control method applicable to an electric vehicle. The vehicle torque control method includes:

determining, during driving of the electric vehicle, an actual output torque value based on a driving state of the electric vehicle;
calculating a difference between the actual output torque value and a limited torque value of the vehicle;
determining a torque adjustment gradient value based on the difference; and
adjusting the actual output torque value of the electric vehicle based on the torque adjustment gradient value.

In some embodiments, determining the torque adjustment gradient value based on the difference includes:

searching for the torque adjustment gradient value corresponding to the difference in a preset gradient value list, wherein the gradient value list includes corresponding relationships between difference ranges and gradient values; or
determining a sign of the difference; and searching a gradient value list corresponding to the sign of the difference to determine the torque adjustment gradient value corresponding to the difference.

In some embodiments, adjusting the actual output torque value of the electric vehicle based on the torque adjustment gradient value includes:

in a case where a wheel speed of the electric vehicle fluctuates downward, determining a sum of the torque adjustment gradient value and a demanded torque value at a previous moment as the actual output torque value of the electric vehicle; and
in a case where the wheel speed of the electric vehicle fluctuates upward, determining a difference between the demanded torque value at the previous moment and the torque adjustment gradient value as the actual output torque value of the electric vehicle.

In some embodiments, adjusting the actual output torque value of the electric vehicle based on the torque adjustment gradient value includes:

in a case where a wheel speed of the electric vehicle fluctuates downward, determining a sum of the torque adjustment gradient value and the actual output torque value as the actual output torque value of the electric vehicle; and

in a case where the wheel speed of the electric vehicle fluctuates upward, determining a difference between the actual output torque value and the torque adjustment gradient value as the actual output torque value of the electric vehicle.

In some embodiments, the corresponding relationships between difference ranges and gradient values in the preset gradient value list are fixed data manually set by a user; or the corresponding relationships between difference ranges and gradient values in the preset gradient value list are dynamically adjusted based on a torque control strategy during historical driving processes of the electric vehicle.

In a second aspect, some embodiments of the present disclosure provide a vehicle torque control apparatus applicable to an electric vehicle. The vehicle torque control apparatus includes:

a first determination module, configured to determine, during driving of the electric vehicle, an actual output torque value based on a driving state of the electric vehicle;

a calculation module, configured to calculate a difference between the actual output torque value and a limited torque value of the vehicle;

a second determination module, configured to determine a torque adjustment gradient value based on the difference; and

an adjustment module, configured to adjust the actual output torque value of the electric vehicle based on the torque adjustment gradient value.

In some embodiments, the first determination module includes:

a first sub-module, configured to search for the torque adjustment gradient value corresponding to the difference in a preset gradient value list, wherein the gradient value list includes corresponding relationships between difference ranges and gradient values; or

a second sub-module, configured to determine a sign of the difference; and search a gradient value list corresponding to the sign of the difference to determine the torque adjustment gradient value corresponding to the difference.

In some embodiments, the adjustment module includes:

a third sub-module, configured to: in a case where a wheel speed of the electric vehicle fluctuates downward, determine a sum of the torque adjustment gradient value and a demanded torque value at a previous moment as the actual output torque value of the electric vehicle; and

a fourth sub-module, configured to: in a case where the wheel speed of the electric vehicle fluctuates upward, determine a difference between the demanded torque value at the previous moment and the torque adjustment gradient value as the actual output torque value of the electric vehicle.

In some embodiments, the adjustment module includes:

a fifth sub-module, configured to: in a case where a wheel speed of the electric vehicle fluctuates downward, determine a sum of the torque adjustment gradient value and the actual output torque value as the actual output torque value of the electric vehicle; and

a sixth sub-module, configured to: in a case where the wheel speed of the electric vehicle fluctuates upward, determine a difference between the actual output torque value and the torque adjustment gradient value as the actual output torque value of the electric vehicle.

In some embodiments, the corresponding relationships between difference ranges and gradient values in the preset gradient value list are fixed data manually set by a user; or the corresponding relationships between difference ranges and gradient values in the preset gradient value list are dynamically adjusted based on a torque control strategy during historical driving processes of the electric vehicle.

In a third aspect, some embodiments of the present disclosure provide a vehicle torque control method. The vehicle torque control method includes:

acquiring, during driving of an electric vehicle, an actual output torque value of the electric vehicle at a first moment;

calculating a difference between the actual output torque value and a limited torque value of the electric vehicle;

determining a torque adjustment gradient value based on the difference; and

acquiring a demanded driving torque value of the electric vehicle at a second moment by adjusting the actual output torque value of the electric vehicle at the first moment based on the torque adjustment gradient value, wherein the second moment is later than and adjacent to the first moment.

In some embodiments, determining the torque adjustment gradient value based on the difference includes:

searching for the torque adjustment gradient value corresponding to the difference in a gradient value list, wherein the gradient value list includes corresponding relationships between difference ranges and gradient values; or

determining a sign of the difference; and searching a gradient value list corresponding to the sign of the difference to determine the torque adjustment gradient value corresponding to the difference in the gradient value list corresponding to the sign of the difference.

In some embodiments, the corresponding relationships between difference ranges and gradient values in the gradient value list are fixed data; or the corresponding relationships between difference ranges and gradient values in the gradient value list are dynamically adjusted based on a torque control strategy during historical driving processes of the electric vehicle.

In some embodiments, acquiring a demanded driving torque value of the electric vehicle at a second moment by adjusting the actual output torque value of the electric vehicle at the first moment based on the torque adjustment gradient value includes:

in a case where a wheel speed of the electric vehicle fluctuates downward, determining a sum of the torque adjustment gradient value and a demanded torque value at the first moment as the demanded driving torque value of the electric vehicle at the second moment; and

in a case where the wheel speed of the electric vehicle fluctuates upward, determining a difference between the demanded torque value at the first moment and the torque adjustment gradient value as the demanded driving torque value of the electric vehicle at the second moment.

In some embodiments, acquiring a demanded driving torque value of the electric vehicle at a second moment by adjusting the actual output torque value of the electric vehicle at the first moment based on the torque adjustment gradient value includes:

in a case where a wheel speed of the electric vehicle fluctuates downward, determining a sum of the torque adjustment gradient value and the actual output torque value of the electric vehicle at the first moment as the demanded driving torque value of the electric vehicle at the second moment; and

in a case where the wheel speed of the electric vehicle fluctuates upward, determining a difference between the actual output torque value of the electric vehicle at the first moment and the torque adjustment gradient value as the demanded driving torque value of the electric vehicle at the second moment.

In some embodiments, in a case where a wheel speed of the electric vehicle at the second moment is greater than a wheel speed of the electric vehicle at the first moment, the wheel speed of the electric vehicle fluctuates upward; or in a case where a wheel speed of the electric vehicle at the second moment is less than a wheel speed of the electric vehicle at the first moment, the wheel speed of the electric vehicle fluctuates downward.

In some embodiments, acquiring the actual output torque value of the electric vehicle at the first moment includes:

receiving the actual output torque value of the electric vehicle at the first moment from a torque sensor of the electric vehicle; or

determining the actual output torque value of the electric vehicle at the first moment based on a theoretical output torque value of the electric vehicle at the first moment and a transmission efficiency.

In some embodiments, the method further includes:

acquiring an engine power and an engine speed of the electric vehicle at the first moment; and

determining the theoretical output torque value of the electric vehicle at the first moment based on the engine power and the engine speed.

In some embodiments, the method further includes:

acquiring an intake manifold pressure, an engine displacement, and an engine speed of the electric vehicle at the first moment; and

determining the theoretical output torque value of the electric vehicle at the first moment based on the intake manifold pressure, the engine displacement, and the engine speed.

In a fourth aspect, some embodiments of the present disclosure provide a vehicle torque control apparatus. The vehicle torque control apparatus includes:

a first determination module, configured to acquire, during driving of an electric vehicle, an actual output torque value of the electric vehicle at a first moment;

a calculation module, configured to calculate a difference between the actual output torque value and a limited torque value of the electric vehicle;

a second determination module, configured to determine a torque adjustment gradient value based on the difference; and

an adjustment module, configured to acquire a demanded driving torque value of the electric vehicle at a second moment by adjusting the actual output torque value of the electric vehicle based on the torque adjustment gradient value, wherein the second moment is later than and adjacent to the first moment.

In some embodiments, the first determination module includes:

a first sub-module, configured to search for the torque adjustment gradient value corresponding to the difference in a gradient value list, wherein the gradient value list includes corresponding relationships between difference ranges and gradient values; or

a second sub-module, configured to determine a sign of the difference; and search a gradient value list corresponding to the sign of the difference to determine the torque adjustment gradient value corresponding to the difference in the gradient value list corresponding to the sign of the difference.

In some embodiments, the corresponding relationships between difference ranges and gradient values in the gradient value list are fixed data; or the corresponding relationships between difference ranges and gradient values in the gradient value list are dynamically adjusted based on a torque control strategy during historical driving processes of the electric vehicle.

In some embodiments, the adjustment module includes:

a third sub-module, configured to: in a case where a wheel speed of the electric vehicle fluctuates downward, determine a sum of the torque adjustment gradient value and a demanded torque value at the first moment as the demanded driving torque value of the electric vehicle at the second moment; and

a fourth sub-module, configured to: in a case where the wheel speed of the electric vehicle fluctuates upward, determine a difference between the demanded torque value at the first moment and the torque adjustment gradient value as the demanded driving torque value of the electric vehicle at the second moment.

In some embodiments, the adjustment module includes:

a fifth sub-module, configured to: in a case where a wheel speed of the electric vehicle fluctuates downward, determine a sum of the torque adjustment gradient value and the actual output torque value of the electric vehicle at the first moment as the demanded driving torque value of the electric vehicle at the second moment; and

a sixth sub-module, configured to: in a case where the wheel speed of the electric vehicle fluctuates upward, determine a difference between the actual output torque value of the electric vehicle at the first moment and the torque adjustment gradient value as the demanded driving torque value of the electric vehicle at the second moment.

In some embodiments, in a case where a wheel speed of the electric vehicle at the second moment is greater than a wheel speed of the electric vehicle at the first moment, the wheel speed of the electric vehicle fluctuates upward; or in a case where a wheel speed of the electric vehicle at the second moment is less than a wheel speed of the electric vehicle at the first moment, the wheel speed of the electric vehicle fluctuates downward.

In some embodiments, the first determination module is configured to:

receive the actual output torque value of the electric vehicle at the first moment from a torque sensor of the electric vehicle; or

determine the actual output torque value of the electric vehicle at the first moment based on a theoretical output torque value of the electric vehicle at the first moment and a transmission efficiency.

In some embodiments, the first determination module is further configured to:

acquire an engine power and an engine speed of the electric vehicle at the first moment; and

determine the theoretical output torque value of the electric vehicle at the first moment based on the engine power and the engine speed.

In some embodiments, the first determination module is further configured to:

acquire an intake manifold pressure, an engine displacement, and an engine speed of the electric vehicle at the first moment; and
determine the theoretical output torque value of the electric vehicle at the first moment based on the intake manifold pressure, the engine displacement, and the engine speed.

In a fifth aspect, some embodiments of the present disclosure provide a computer device. The computer device includes: a memory, a processor, and at least one computer program stored in the memory and executable on the processor. The at least one computer program, when executed by the processor, causes the computer device to perform the vehicle torque control method as described above.
In a sixth aspect, some embodiments of the present disclosure provide a vehicle. The vehicle includes the computer device as described in the fifth aspect.
In a seventh aspect, some embodiments of the present disclosure provide a computer-readable storage medium. The computer-readable storage medium stores at least one computer program, wherein the at least one computer program, when executed by a processor, causes the processor to perform the vehicle torque control method as described above.
In an eighth aspect, some embodiments of the present disclosure provide a computer program product. The computer program product stores at least one computer instruction, which when loaded and executed by a processor, causes a computer to perform the vehicle torque control method as described above.
In the vehicle torque control solution according to the embodiments of the present disclosure, the actual output torque value of the electric vehicle at the first moment is acquired during driving of the electric vehicle; the difference between the actual output torque value of the electric vehicle at the first moment and the limited torque value of the electric vehicle is calculated; the torque adjustment gradient value is determined based on the difference; and the actual output torque of the electric vehicle at the first moment is adjusted based on the torque adjustment gradient value, to acquire the demanded driving torque value of the electric vehicle at the second moment. In this way, the demanded driving torque value of the electric vehicle at the second moment is acquired by adjusting the actual output torque value of the electric vehicle at the first moment, making the determination process of the demanded driving torque value of the electric vehicle at the second moment more reasonable. The drive motor is controlled at the second moment to operate based on the demanded driving torque value of the electric vehicle at the second moment, ensuring that the actual output torque of the electric vehicle at the second moment does not change significantly. This effectively suppresses fluctuations in the demanded driving torque, thereby mitigating the driving issue of fluctuations in the wheel speed of the electric vehicle. Therefore, the driving smoothness of the electric vehicle is improved, leading to an enhanced driving experience.

**BRIEF DESCRIPTION OF DRAWINGS**

The accompanying drawings of the specification constituting a part of the present disclosure provide further understanding of the present disclosure. The schematic embodiments of the present disclosure and description thereof are intended to be illustrative of the present disclosure and do not constitute any limitation to the present disclosure. In the accompanying drawings:

FIG. 1 is a schematic diagram of an implementation environment of a vehicle torque control method according to some embodiments of the present disclosure;
FIG. 2 is a flowchart of a vehicle torque control method according to some embodiments of the present disclosure;
FIG. 3 is a schematic diagram showing the torque control effect achieved by the method according to some embodiments of the present disclosure;
FIG. 4 is a schematic diagram showing the torque control effect in the related art;
FIG. 5 is a structural block diagram of a vehicle torque control apparatus according to some embodiments of the present disclosure;

FIG. 6 is a flowchart of a vehicle torque control method according to some embodiments of the present disclosure;

FIG. 7 is a structural block diagram of a vehicle torque control apparatus according to some embodiments of the present disclosure;

FIG. 8 is a schematic structural diagram of a terminal device according to some embodiments of the present disclosure; and

FIG. 9 is a schematic structural diagram of a server according to some embodiments of the present disclosure.

## DETAILED DESCRIPTION

The present disclosure is described in detail below with reference to the drawings and embodiments. It should be noted that the embodiments in the present disclosure and features in the embodiments may be combined with each other in a non-conflicting situation.

The following detailed description is exemplary and is intended to further describe the present disclosure. Unless otherwise defined, all technical terms used herein have the same meaning as commonly understood by a person of ordinary skill in the art to which the present disclosure pertains. The terms used herein are merely intended to describe the specific implementations, rather than to limit the exemplary implementations of the present disclosure.

To make the to-be-solved technical problems, technical solutions, and advantages of the present disclosure clearer, the present disclosure is described in detail below with reference to the accompanying drawings and specific embodiments.

The vehicle torque control solution according to the embodiments of the present disclosure can mitigate the driving issue of persistent vehicle vibration that occurs when the actual output torque is limited by the allowable limited torque value of the vehicle. When the actual output torque approaches or exceeds the allowable limited torque value of the vehicle, the solution applies differentiated gradient limits for the increase and decrease of the driver-demanded torque. In this way, the driver-demanded torque decreases rapidly but increases slowly, thereby suppressing vehicle vibration caused by fluctuations in the demanded torque.

The vehicle torque control solution according to the embodiments of the present disclosure is described in detail below with reference to the accompanying drawings, specific embodiments and application scenarios.

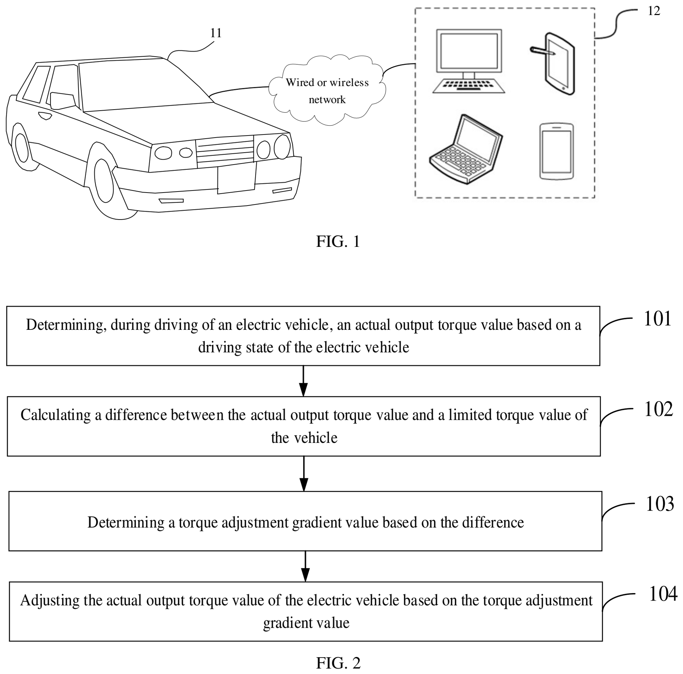

FIG. 1 is a schematic diagram of an implementation environment of a vehicle torque control method according to some embodiments of the present disclosure. The implementation environment includes an electric vehicle 11 and a computer device 12. The computer device 12 may be disposed in the electric vehicle 11 or may be an independent device external to the electric vehicle 11 that interacts with the electric vehicle 11 through a wired or wireless network. The vehicle torque control method according to the embodiments of the present disclosure is performed by the computer device 12.

The computer device 12 may be a terminal device or a server, which is not limited in the embodiments of the present disclosure.

The terminal device may be an in-vehicle terminal of the electric vehicle or an electronic device in communication connection with the in-vehicle terminal of the electric vehicle. The server is a single server, a server cluster composed of a plurality of servers, or any of a cloud computing platform or a virtualization center, which is not limited in the embodiments of the present disclosure. The server is in direct or indirect communication connection with the terminal device through wired or wireless communication. The server has functions of data reception, data processing, and data transmission. Certainly, the server may also have other functions, which are not limited in the embodiments of the present disclosure.

Those skilled in the art should understand that the terminal device and server are only examples. Other existing or future terminal devices and servers, if applicable to the present disclosure, should also be included in the protection scope of the present disclosure and referenced herein.

As shown in FIG. 2, the vehicle torque control method according to some embodiments of the present disclosure includes the following processes:

In process 101, during driving of an electric vehicle, an actual output torque value is determined based on a driving state of the electric vehicle.

The vehicle torque control method according to the embodiments of the present disclosure is applicable to an electric vehicle, which may be either a vehicle controlled by the electric power system or a vehicle controlled by the hybrid power system. The actual output torque value may be determined in real-time by a power control system of the electric vehicle during driving. The actual output torque value may be derived from current engine power.

In process 102, a difference between the actual output torque value and a limited torque value of the vehicle is calculated.

A limited torque value is preset for the power control system of the electric vehicle. When the vehicle torque begins to change, adjustments are made with reference to the preset limited torque value in the system. During the adjustment process, the limited torque value of the vehicle changes, and each subsequent torque adjustment is made with reference to the limited torque value of the vehicle acquired from the previous adjustment.

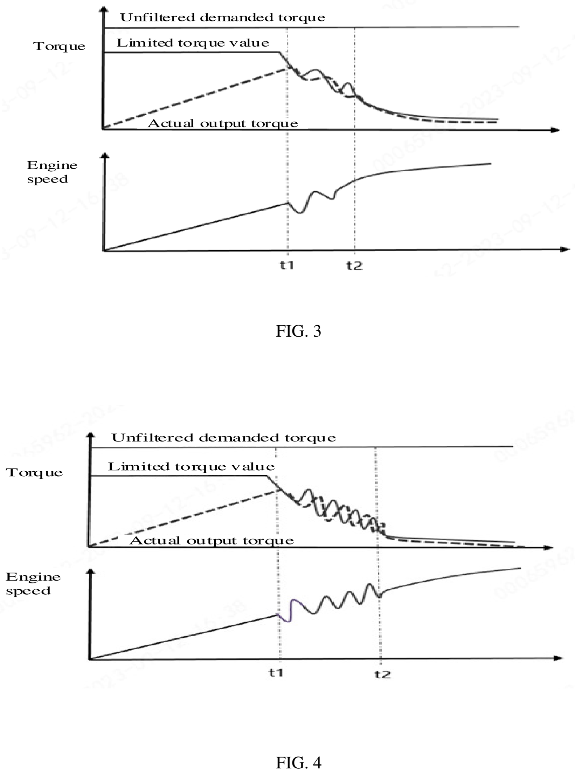

FIG. 3 is a schematic diagram showing the torque control effect achieved by the vehicle torque control method according to some embodiments of the present disclosure. As shown in FIG. 3, the unfiltered demanded torque remains constant. The actual output torque, after being limited by the limited torque value, changes during the control process, and the limited torque value also varies during the torque control process.

In process 103, a torque adjustment gradient value is determined based on the difference.

One optional method for determining the torque adjustment gradient value based on the difference is as follows: Method 1: The torque adjustment gradient value corresponding to the difference is searched for in a preset gradient value list. The gradient value list includes corresponding relationships between difference ranges and gradient values.

In practical implementation, once the difference is calculated, a target difference range to which the difference belongs is searched for in the preset gradient value list, and a gradient value corresponding to the target difference range is determined as the torque adjustment gradient value. The specific corresponding relationships between difference ranges and gradient values may be defined by those skilled in the art based on experimental results or empirical data. No specific limitation is imposed in the embodiments of the present disclosure.

The alternative method is as follows: Method 2: The sign of the difference is determined; and a gradient value list corresponding to the sign of the difference is searched to determine the torque adjustment gradient value corresponding to the difference.

The sign of the difference may indicate whether the wheel speed of the electric vehicle fluctuates upward or downward. When the wheel speed fluctuates downward, the corresponding torque adjustment gradient value is positive, indicating that the torque value needs to increase; conversely, a negative value indicates that the torque value needs to decrease. In Method 2, two gradient value lists are preset: one list corresponds to gradient values corresponding to differences determined when the wheel speed fluctuates downward; and the other corresponds to gradient values corresponding to differences determined when the wheel speed fluctuates upward.

The corresponding relationships between difference ranges and gradient values in the preset gradient value list are fixed data manually set by the user, or the corresponding relationships between difference ranges and gradient values in the preset gradient value list are dynamically adjusted based on a torque control strategy during historical driving processes of the electric vehicle.

It should be noted that the above only lists two feasible methods for generating the data in the preset gradient value list. In practical implementation, the method is not limited thereto, and those skilled in the art may define the method for generating the preset gradient value list in accordance with actual requirements. For example, the corresponding relationships between difference ranges and gradient values may alternatively be determined based on extensive experimental test data.

In process 104, the actual output torque value of the electric vehicle is adjusted based on the torque adjustment gradient value.

One optional method for adjusting the actual output torque value of the electric vehicle based on the torque adjustment gradient value is as follows:

In a case where the wheel speed of the electric vehicle fluctuates downward, a sum of the torque adjustment gradient value and a demanded torque value at a previous moment is determined as the actual output torque value of the electric vehicle; and in a case where the wheel speed of the electric vehicle fluctuates upward, a difference between the demanded torque value at the previous moment and the torque adjustment gradient value is determined as the actual output torque value of the electric vehicle.

Another optional method for adjusting the actual output torque value of the electric vehicle based on the torque adjustment gradient value is as follows:

In a case where the wheel speed of the electric vehicle fluctuates downward, a sum of the torque adjustment gradient value and the actual output torque value is determined as the actual output torque value of the electric vehicle; and in a case where the wheel speed of the electric vehicle fluctuates upward, a difference between the actual output torque value and the torque adjustment gradient value is determined as the actual output torque value of the electric vehicle.

During the driving process of the electric vehicle, compared with the torque filtering method provided by the related art, the vehicle torque control method according to the embodiments of the present disclosure can effectively suppress the frequency of wheel speed fluctuations and significantly reduces the duration of such fluctuations. FIG. 4 is a schematic diagram showing the torque control effect in the related art. As shown in FIG. 4, in the technical solution, when the actual output torque approaches or exceeds the allowable limited torque value of the vehicle, the sole reliance on a single torque filtering coefficient causes fluctuations in the wheel speed once the torque is limited and reduced. Given the correlation between the wheel speed and the limited torque value, fluctuations in the wheel speed in turn affect oscillations of the limited torque value. The oscillations of the limited torque value result in the actual output torque oscillating with nearly the same period and amplitude but with different phases, thereby directly aggravating the wheel speed fluctuations. As a consequence, the vehicle experiences vibration over an extended duration from t1 to t2, making the vibration problem noticeably perceptible.

In contrast, FIG. 3 is a schematic diagram showing the torque control effect achieved by the method according to some embodiments of the present disclosure. As shown in FIG. 3, the torque control method of the present disclosure applies differentiated gradient limits for the increase and decrease of the demanded torque. The difference between the actual output torque and the limited torque value of the vehicle is used to search the list for the gradient limit value, that is, the torque adjustment gradient value, for the increase and decrease of the demanded torque. When the wheel speed fluctuates downward, the limited torque value of the vehicle fluctuates upward, but the demanded torque is constrained within a smaller increasing gradient by the gradient limit for increasing, effectively suppressing passive fluctuations in the actual output torque and indirectly mitigating wheel speed fluctuations of the vehicle. Compared to the duration of vibration shown in FIG. 4, the method successfully shortens the duration from t1 to t2 (i.e., vehicle vibration duration), and the vehicle vibration issue is noticeably improved.

In the vehicle torque control method according to the embodiments of the present disclosure, the actual output torque value is determined based on the driving state of the electric vehicle during driving of the electric vehicle; the difference between the actual output torque value and the limited torque value of the vehicle is calculated; the torque adjustment gradient value is determined based on the difference; and the actual output torque of the electric vehicle is adjusted based on the torque adjustment gradient value. The torque control solution according to the embodiments of the present disclosure applies differentiated gradient limits for the increase and decrease of the demanded torque. When the wheel speed fluctuates, the solution can effectively suppress the passive fluctuations in the demanded torque, thereby indirectly mitigating the driving issue caused by wheel speed fluctuations of the vehicle.

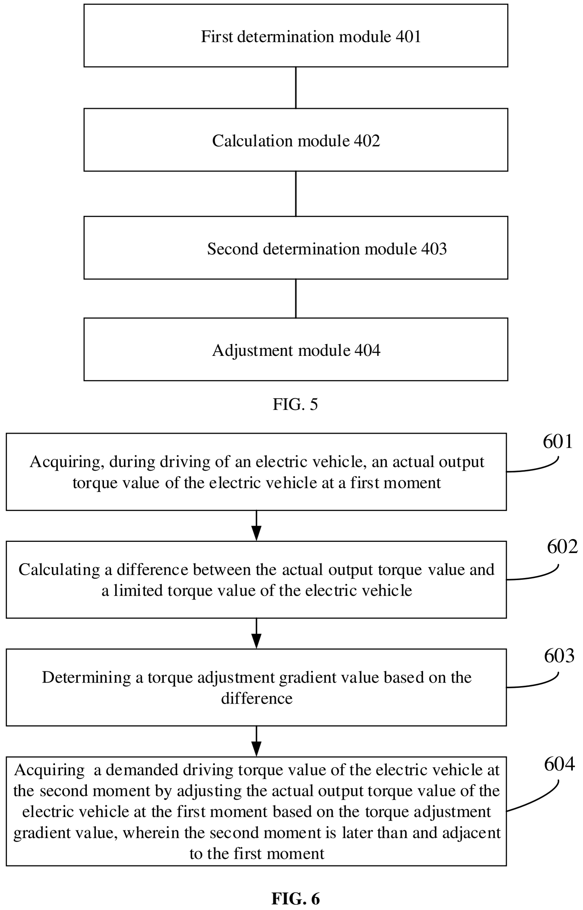

FIG. 5 is a structural block diagram of a vehicle torque control apparatus according to some embodiments of the present disclosure.

The vehicle torque control apparatus according to some embodiments of the present disclosure is applicable to an electric vehicle, and the apparatus includes the following functional modules:

A first determination module 401 is configured to determine, during driving of the electric vehicle, an actual output torque value based on a driving state of the electric vehicle.

A calculation module 402 is configured to calculate a difference between the actual output torque value and a limited torque value of the vehicle.

A second determination module 403 is configured to determine a torque adjustment gradient value based on the difference.

An adjustment module 404 is configured to adjust the actual output torque value of the electric vehicle based on the torque adjustment gradient value.

In some embodiments, the first determination module 401 includes:

a first sub-module, configured to search for the torque adjustment gradient value corresponding to the difference in a preset gradient value list, wherein the gradient value list includes corresponding relationships between difference ranges and gradient values; or

a second sub-module, configured to determine a sign of the difference; and search a gradient value list corresponding to the sign of the difference to determine the torque adjustment gradient value corresponding to the difference.

In some embodiments, the adjustment module 404 includes:

a third sub-module, configured to: in a case where a wheel speed of the electric vehicle fluctuates downward, determine a sum of the torque adjustment gradient value and a demanded torque value at a previous moment as the actual output torque value of the electric vehicle; and

a fourth sub-module, configured to: in a case where the wheel speed of the electric vehicle fluctuates upward, determine a difference between the demanded torque value at the previous moment and the torque adjustment gradient value as the actual output torque value of the electric vehicle.

In some embodiments, the adjustment module 404 includes:

a fifth sub-module, configured to: in a case where a wheel speed of the electric vehicle fluctuates downward, determine a sum of the torque adjustment gradient value and the actual output torque value as the actual output torque value of the electric vehicle; and

a sixth sub-module, configured to: in a case where the wheel speed of the electric vehicle fluctuates upward, determine a difference between the actual output torque value and the torque adjustment gradient value as the actual output torque value of the electric vehicle.

In some embodiments, the corresponding relationships between difference ranges and gradient values in the preset gradient value list are fixed data manually set by a user; or the corresponding relationships between difference ranges and gradient values in the preset gradient value list are dynamically adjusted based on a torque control strategy during historical driving processes of the electric vehicle.

According to the vehicle torque control apparatus according to the embodiments of the present disclosure, the actual output torque value is determined based on the driving state of the electric vehicle during driving of the electric vehicle; the difference between the actual output torque value and the limited torque value of the vehicle is calculated; the torque adjustment gradient value is determined based on the difference; and the actual output torque of the electric vehicle is adjusted based on the torque adjustment gradient value. The vehicle torque control apparatus according to the embodiments of the present disclosure applies differentiated gradient limits for the increase and decrease of the demanded torque. When the wheel speed fluctuates, the solution can effectively suppress the passive fluctuations in the demanded torque, thereby indirectly mitigating the driving issue caused by wheel speed fluctuations of the vehicle.

The vehicle torque control apparatus shown in FIG. 5 according to the embodiments of the present disclosure can implement all processes of the method embodiments in FIG. 1. Details are not described herein again to avoid repetition.

FIG. 6 shows a vehicle torque control method according to some embodiments of the present disclosure. The method may be performed by the computer device 12 in the implementation environment shown in FIG. 1. As shown in FIG. 6, the method includes the following processes 601 to 604.

In process 601, an actual output torque value of an electric vehicle at a first moment is acquired during driving of the electric vehicle.

In some embodiments of the present disclosure, the electric vehicle may be a battery electric vehicle (BEV) or a hybrid electric vehicle (HEV), which is not limited in the embodiments of the present disclosure. The first moment may be a current moment or a previous moment of the current moment, which is also not limited in the embodiments of the present disclosure.

In some embodiments, the process of acquiring the actual output torque value of the electric vehicle at the first moment includes: receiving the actual output torque value of the electric vehicle at the first moment from a torque sensor of the electric vehicle; or determining the actual output torque value of the electric vehicle at the first moment based on a theoretical output value of the electric vehicle at the first moment and a transmission efficiency.

In some embodiments, the torque sensor of the electric vehicle detects the actual output torque value of the electric vehicle in real time, and transmits the actual output torque value of the electric vehicle at the first moment to the computer device after detecting the same, such that the computer device acquires the actual output torque value of the electric vehicle at the first moment.

In some embodiments, prior to determining the actual output torque value of the electric vehicle at the first moment based on the theoretical output torque value of the electric vehicle at the first moment and the transmission efficiency, it is necessary to first acquire the theoretical output torque value of the electric vehicle at the first moment. The manner of acquiring the theoretical output torque value of the electric vehicle at the first moment is not limited in the embodiments of the present disclosure. In some embodiments, the embodiments of the present disclosure provide the following two methods for acquiring the theoretical output torque value of the electric vehicle at the first moment.

Method 1: An engine power and an engine speed of the electric vehicle at the first moment are acquired; and the theoretical output torque value of the electric vehicle at the first moment is determined based on the engine power and the engine speed.

In some embodiments, the power and speed of the engine at the first moment are received from the engine, thereby acquiring the engine power and engine speed of the electric vehicle at the first moment. The theoretical output torque value of the electric vehicle at the first moment is determined based on the engine power and engine speed using the following formula (1):

$$T_{1\,theoretical} = \frac{P_1 * 9550}{N_1} \quad (1)$$

In the above formula (1), $T_{1theoretical}$ represents the theoretical output torque value of the electric vehicle at the first moment, $P_1$ represents the engine power of the electric vehicle at the first moment, and $N_1$ represents the engine speed of the electric vehicle at the first moment.

Method 2: An intake manifold pressure, an engine displacement, and an engine speed of the electric vehicle at the first moment are acquired; and the theoretical output torque value of the electric vehicle at the first moment is determined based on the intake manifold pressure, the engine displacement, and the engine speed.

In some embodiments, the theoretical output torque value of the electric vehicle at the first moment is determined based on the intake manifold pressure, the engine displacement, and the engine speed using the following formula (2):

$$T_{1\,theoretical} = k * \lambda * \eta_v * \eta_t * \frac{P_{intake} * V_1 * N_1}{60 * 1000} \quad (2)$$

In the above formula (2), $T_{1theoretical}$ represents the theoretical output torque value of the electric vehicle at the first moment, k is a correction factor, $\lambda$ represents an excess air coefficient, $\eta_v$ represents a volumetric efficiency, $\eta_t$ represents a

mechanical efficiency, $P_{intake}$ represents the intake manifold pressure of the electric vehicle at the first moment, $V_1$ represents the engine displacement of the electric vehicle at the first moment, and $N_1$ represents the engine speed of the electric vehicle at the first moment. The correction factor, excess air coefficient, volumetric efficiency, and mechanical efficiency are set based on empirical data or flexibly adjusted according to the implementation environment, which is not limited in the embodiments of the present disclosure.

In some embodiments, after acquiring the theoretical output torque value of the electric vehicle at the first moment, the process of determining the actual output torque value of the electric vehicle at the first moment based on the theoretical output torque value of the electric vehicle at the first moment and the transmission efficiency includes: determining the product of the theoretical output torque value of the electric vehicle at the first moment and the transmission efficiency as the actual output torque value of the electric vehicle at the first moment.

The transmission efficiency is set based on empirical data or flexibly adjusted according to the implementation environment, which is not limited in the embodiments of the present disclosure. For example, the transmission efficiency is 0.8.

In some embodiments, the actual output torque value of the electric vehicle at the first moment is determined based on the theoretical output torque value of the electric vehicle at the first moment and the transmission efficiency using the following formula (3).

$$T_{1_{actual}} = T_{1_{theoretical}} * \eta \ (3)$$

In the above formula (3), $T_{1_{actual}}$ represents the actual output torque value of the electric vehicle at the first moment, $T_{1_{theoretical}}$ represents the theoretical output torque value of the electric vehicle at the first moment, and $\eta$ represents the transmission efficiency.

In process 602, a difference between the actual output torque value and the limited torque value of the electric vehicle is calculated.

In some embodiments, after determining the actual output torque value of the electric vehicle at the first moment in the above process 601, the difference between the actual output torque value and the limited torque value of the electric vehicle is calculated. Alternatively, the difference between the actual output torque value and the limited torque value of the electric vehicle is calculated by subtracting the actual output torque value from the limited torque value of the electric vehicle.

In process 603, a torque adjustment gradient value is determined based on the difference.

In some embodiments, the process of determining the torque adjustment gradient value based on the difference is not limited in the embodiments of the present disclosure. Some embodiments of the present disclosure provide the following two methods for determining the torque adjustment gradient value based on the difference.

Method 1: The torque adjustment gradient value corresponding to the difference is searched for in a gradient value list.

The gradient value list includes corresponding relationships between difference ranges and gradient values. The corresponding relationships between difference ranges and gradient values in the gradient value list are fixed data set by the user, or the corresponding relationships between difference ranges and gradient values in the gradient value list are dynamically adjusted based on a torque control strategy during historical driving processes of the electric vehicle.

In some embodiments, a difference range to which the difference belongs is determined, and a gradient value corresponding to the difference range in the gradient value list is used as the torque adjustment gradient value corresponding to the difference.

Method 2: The sign of the difference is determined; and a gradient value list corresponding to the sign of the difference is searched to determine the torque adjustment gradient value corresponding to the difference in the gradient value list corresponding to the sign of the difference.

In some embodiments, the gradient value list corresponding to the sign of the difference includes corresponding relationships between difference ranges and gradient values. The corresponding relationships between difference ranges and gradient values in the gradient value list corresponding to the sign of the difference are fixed data, or dynamically adjusted based on the torque control strategy during historical driving processes of the electric vehicle.

In some embodiments, a difference range to which the difference belongs is determined, and a gradient value corresponding to the difference range in the gradient value list corresponding to the sign of the difference is used as the torque adjustment gradient value corresponding to the difference.

In process 604, a demanded driving torque value of the electric vehicle at the second moment is acquired by adjusting the actual output torque value of the electric vehicle at the first moment based on the torque adjustment gradient value. The second moment is later than and adjacent to the first moment.

In some embodiments, in a case where the first moment is a current moment, the second moment is the next moment after the current moment. In a case where the first moment is a previous moment of the current moment, the second moment is the current moment.

In some embodiments, the following two methods are used to acquire the demanded driving torque value of the electric vehicle at the second moment by adjusting the actual output torque value of the electric vehicle at the first moment based on the torque adjustment gradient value.

Method 1: In a case where a wheel speed of the electric vehicle fluctuates downward, a sum of the torque adjustment gradient value and a demanded torque value at a first moment is determined as the demanded driving torque value of the electric vehicle at the second moment; or in a case where the wheel speed of the electric vehicle fluctuates upward, a difference between the demanded torque value at the first moment and the torque adjustment gradient value is determined as the demanded driving torque value of the electric vehicle at the second moment.

In a case where a wheel speed of the electric vehicle at the second moment is greater than a wheel speed of the electric vehicle at the first moment, the wheel speed of the electric vehicle fluctuates upward; or in a case where a wheel speed of the electric vehicle at the second moment is less than a wheel speed of the electric vehicle at the first moment, the wheel speed of the electric vehicle fluctuates downward.

In some embodiments, in a case where the wheel speed of the electric vehicle fluctuates downward, it indicates that the speed of the electric vehicle is decreasing, and a higher torque is required at this time. Therefore, the demanded torque value at the first moment is added to the torque adjustment gradient value, to acquire the demanded driving torque value of the electric vehicle at the second moment. The demanded torque value at the first moment is determined based on the throttle opening at the first moment. The demanded torque value at the first moment is a torque value corresponding to the throttle opening at the first moment.

In some embodiments, in a case where the wheel speed of the electric vehicle fluctuates upward, it indicates that the speed of the electric vehicle is increasing, and a lower torque is required at this time. Therefore, the torque adjustment gradient value is subtracted from the demanded torque value at the first moment, to acquire the demanded driving torque value of the electric vehicle at the second moment.

Method 2: In a case where the wheel speed of the electric vehicle fluctuates downward, a sum of the torque adjustment gradient value and the actual output torque value of the electric vehicle at the first moment is determined as the demanded driving torque value of the electric vehicle at the second moment; or in a case where the wheel speed of the electric vehicle fluctuates upward, a difference between the actual output torque value of the electric vehicle at the first moment and the torque adjustment gradient value is determined as the demanded driving torque value of the electric vehicle at the second moment.

In some embodiments, in a case where the wheel speed of the electric vehicle fluctuates downward, it indicates that the speed of the electric vehicle is decreasing, and a higher torque is required at this time. Therefore, the actual output torque value of the electric vehicle at the first moment is added to the torque adjustment gradient value, to acquire the demanded driving torque value of the electric vehicle at the second moment.

In some embodiments, in a case where the wheel speed of the electric vehicle fluctuates upward, it indicates that the speed of the electric vehicle is increasing, and a lower torque is required at this time. Therefore, the torque adjustment gradient value is subtracted from the actual output torque value of the electric vehicle at the first moment, to acquire the demanded driving torque value of the electric vehicle at the second moment.

In some embodiments, after determining the demanded driving torque value of the electric vehicle at the second moment through the above process, a drive motor is controlled at the second moment to operate based on the demanded driving torque value at the second moment.

In the described method, after acquiring the actual output torque value of the electric vehicle at the first moment, the difference between the actual output torque value of the electric vehicle at the first moment and the limited torque value of the electric vehicle is determined, to determine the torque adjustment gradient value based on the difference. Subsequently, the demanded driving torque value of the electric vehicle at the second moment is determined based on the torque adjustment gradient value. This approach makes the determination process of the demanded driving torque value of the electric vehicle at the second moment more reasonable. Furthermore, after determining the demanded driving torque value of the electric vehicle at the second moment, the drive motor is controlled at the second moment to operate based on the demanded driving torque value of the electric vehicle at the second moment, ensuring that the actual output torque value of the electric vehicle at the second moment does not change significantly. This effectively suppresses fluctuations in the demanded driving torque, thereby mitigating the driving issue of fluctuations in the wheel speed of the electric vehicle, and reducing vibration of the electric vehicle. Therefore, the driving smoothness of the electric vehicle is improved, leading to an enhanced driving experience.

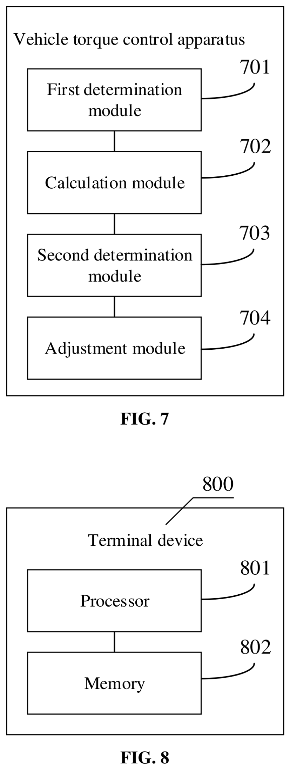

FIG. 7 is a schematic structural diagram of a vehicle torque control apparatus according to some embodiments of the present disclosure. As shown in FIG. 7, the apparatus includes the following modules.

A first determination module 701 is configured to acquire, during driving of an electric vehicle, an actual output torque value of the electric vehicle at a first moment.

A calculation module 702 is configured to calculate a difference between the actual output torque value and a limited torque value of the electric vehicle.

A second determination module 703 is configured to determine a torque adjustment gradient value based on the difference.

An adjustment module 704 is configured to acquire a demanded driving torque value of the electric vehicle at a second moment by adjusting the actual output torque value of the electric vehicle based on the torque adjustment gradient value, wherein the second moment is later than and adjacent to the first moment.

In some embodiments, the first determination module 701 includes:

a first sub-module, configured to search for the torque adjustment gradient value corresponding to the difference in a gradient value list, wherein the gradient value list includes corresponding relationships between difference ranges and gradient values; or

a second sub-module, configured to determine a sign of the difference; and search a gradient value list corresponding to the sign of the difference to determine the torque adjustment gradient value corresponding to the difference in the gradient value list.

In some embodiments, the corresponding relationships between difference ranges and gradient values in the gradient value list are fixed data; or the corresponding relationships between difference ranges and gradient values in the gradient value list are dynamically adjusted based on the torque control strategy during historical driving processes of the electric vehicle.

In some embodiments, the adjustment module 704 includes:

a third sub-module, configured to: in a case where a wheel speed of the electric vehicle fluctuates downward, determine a sum of the torque adjustment gradient value and a demanded torque value at the first moment as the demanded driving torque value of the electric vehicle at the second moment; and

a fourth sub-module, configured to: in a case where the wheel speed of the electric vehicle fluctuates upward, determine a difference between the demanded torque value at the first moment and the torque adjustment gradient value as the demanded driving torque value of the electric vehicle at the second moment.

In some embodiments, the adjustment module 704 includes:

a fifth sub-module, configured to: in a case where a wheel speed of the electric vehicle fluctuates downward, determine a sum of the torque adjustment gradient value and the actual output torque value of the electric vehicle at the first moment as the demanded driving torque value of the electric vehicle at the second moment; and

a sixth sub-module, configured to: in a case where the wheel speed of the electric vehicle fluctuates upward, determine a difference between the actual output torque value of the electric vehicle at the first moment and the torque adjustment gradient value as the demanded driving torque value of the electric vehicle at the second moment.

In some embodiments, in a case where a wheel speed of the electric vehicle at the second moment is greater than a wheel speed of the electric vehicle at the first moment, the wheel speed of the electric vehicle fluctuates upward; or in a case where a wheel speed of the electric vehicle at the second moment is less than a wheel speed of the electric vehicle at the first moment, the wheel speed of the electric vehicle fluctuates downward.

In some embodiments, the first determination module 701 is configured to:

receive the actual output torque value of the electric vehicle at the first moment from a torque sensor of the electric vehicle; or

determine the actual output torque value of the electric vehicle at the first moment based on a theoretical output torque value of the electric vehicle at the first moment and a transmission efficiency.

In some embodiments, the first determination module 701 is further configured to:

acquire an engine power and an engine speed of the electric vehicle at the first moment; and

determine the theoretical output torque value of the electric vehicle at the first moment based on the engine power and the engine speed.

In some embodiments, the first determination module 701 is further configured to:

acquire an intake manifold pressure, an engine displacement, and an engine speed of the electric vehicle at the first moment; and

determine the theoretical output torque value of the electric vehicle at the first moment based on the intake manifold pressure, the engine displacement, and the engine speed.

After acquiring the actual output torque value of the electric vehicle at the first moment, the described apparatus determines the difference between the actual output torque value of the electric vehicle at the first moment and the limited torque value of the electric vehicle, to determine the torque adjustment gradient value based on the difference. Subsequently, the demanded driving torque value of the electric vehicle at the second moment is determined based on the torque adjustment gradient value. This approach makes the determination process of the demanded driving torque value of the electric vehicle at the second moment more reasonable. Furthermore, after determining the demanded driving torque value of the electric vehicle at the second moment, the drive motor is controlled at the second moment to operate based on the demanded driving torque value of the electric vehicle at the second moment, ensuring that the actual output torque value of the electric vehicle at the second moment does not change significantly. This effectively suppresses fluctuations in the demanded driving torque, thereby mitigating the driving issue of fluctuations in the wheel speed of the electric vehicle, and reducing vibration of the electric vehicle. Therefore, the driving smoothness of the electric vehicle is improved, leading to an enhanced driving experience.

It should be understood that when the apparatus provided above implements its functions, division of the foregoing functional modules is merely used as an example. In practical application, the foregoing functions may be allocated to and completed by different functional modules as required, that is, an internal structure of the apparatus is divided into different function modules to complete all or some of the foregoing functions. In addition, the apparatus according to the foregoing embodiments belongs to the same conception as the embodiments of the method. For a specific implementation process, reference may be made to the method embodiments, and details are not described herein again.

FIG. 8 is a structural block diagram of a terminal device 800 according to some embodiments of the present disclosure. The terminal device 800 may be any type of electronic device product capable of human-computer interaction with users through one or more means such as a keyboard, touchpad, remote control, voice interaction, or handwriting device. Examples include personal computers (PCs), mobile phones, smartphones, personal digital assistants (PDAs), wearable devices, pocket PCs (PPCs), tablets, smart vehicle infotainment systems, smart TVs, smart speakers, and smartwatches.

Generally, the terminal device 800 includes a processor 801 and a memory 802.

The processor 801 may include one or more processing cores, for example, a 4-core processor or an 8-core processor. The processor 801 may be implemented by using at least one hardware form of digital signal processing (DSP), a field-programmable gate array (FPGA), or a programmable logic array (PLA). The processor 801 may alternatively include a main processor and a coprocessor. The main processor is configured to process data in an awake state, also referred to as a central processing unit (CPU), and the coprocessor is a low-power processor configured to process data in a standby state. In some embodiments, the processor 801 may be integrated with a graphics processing unit (GPU). The GPU is configured to be responsible for rendering and drawing content that a display needs to display. In some embodiments, the processor 801 may further include an artificial intelligence (AI) processor. The AI processor is configured to process computing operations related to machine learning.

The memory 802 may include at least one computer-readable storage medium, which may be non-transitory. The memory 802 may further include a high-speed random access memory (RAM) and a non-volatile memory such as one or more magnetic disk storage devices and flash storage devices. In some embodiments, the non-transitory computer-readable storage medium in the memory 802 is configured to store at least one instruction. The at least one instruction is executed by the processor 801 to implement the vehicle torque control method according to the method embodiments of the present disclosure.

A person skilled in the art may understand that the structure shown in FIG. 8 does not constitute a limitation to the terminal device 800, and the terminal device 800 may include more or fewer components than those shown in the figure, or some components may be combined, or a different component deployment may be used.

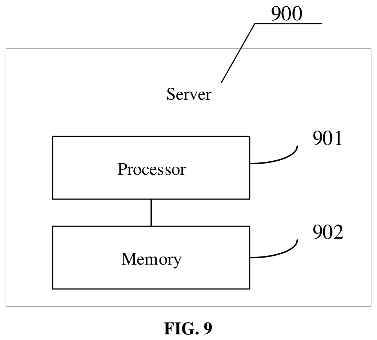

FIG. 9 is a schematic structural diagram of a server according to some embodiments of the present disclosure. The server 900 may vary greatly due to different configurations or performance and may include one or more CPUs 901 and one or more memories 902. The one or more memories 902 store at least one piece of program code, and the at least one piece of program code is loaded and executed by the one or more CPUs 901 to implement the vehicle torque control method according to the method embodiments described above. Certainly, the server 900 may further include components such as a wired or wireless network interface, a keyboard, and an I/O interface for input and output, to facilitate input and output operations. The server 900 may further include other components for implementing device functions. Details are not described herein.

In some embodiments, a vehicle is further provided, which includes the computer device as described above.

In some embodiments, a computer-readable storage medium is further provided. The storage medium stores at least one computer program, which when executed by a processor, causes a computer to perform any of the vehicle torque control methods as described above.

For example, the computer-readable storage medium may be a read-only memory (ROM), a random access memory (RAM), a compact disc ROM (CD-ROM), a magnetic tape, a floppy disk, an optical data storage device, or the like.

In some embodiments, a computer program or computer program product is further provided. The computer program or computer program product stores at least one computer instruction, which when loaded and executed by a processor, causes a computer to perform any of the vehicle torque control methods as described above.

It is to be noted that the information (including but not limited to device information of a user, personal information of the user and the like), data (including but not limited to data for analysis, data for storage, data for exhibition and the like), and signals in the present disclosure are authorized by the user or fully authorized by each party, and the related data are acquired, used and processed according to relevant laws, regulations, and standards of the applicable countries and regions.

It should also be noted that terms "including", "comprising", or any other variants thereof in the present disclosure are intended to cover non-exclusive inclusion such that a process, method, article, or apparatus including a series of elements includes not only those elements but also other elements not explicitly listed, or elements inherent to such a process, method, article, or apparatus. Without further limitation, an element qualified by the phrase "including a ..." does not exclude the presence of an additional identical element in the process, method, article, or apparatus including the element.

The above are merely descriptions of the embodiments of the present disclosure. It should be noted that improvements and modifications may be made by those of ordinary skill in the art without departing from the principles of the present disclosure, and these improvements and modifications should also be considered as falling within the protection scope of the present disclosure.

**Claims**

1. A vehicle torque control method, comprising:

   acquiring, during driving of an electric vehicle, an actual output torque value of the electric vehicle at a first moment;
   calculating a difference between the actual output torque value and a limited torque value of the electric vehicle;
   determining a torque adjustment gradient value based on the difference; and
   acquiring a demanded driving torque value of the electric vehicle at a second moment by adjusting the actual output torque value of the electric vehicle at the first moment based on the torque adjustment gradient value, wherein the second moment is later than and adjacent to the first moment.

2. The vehicle torque control method according to claim 1, wherein determining the torque adjustment gradient value based on the difference comprises:

   searching for the torque adjustment gradient value corresponding to the difference in a gradient value list, wherein the gradient value list comprises corresponding relationships between difference ranges and gradient values; or
   determining a sign of the difference; and searching a gradient value list corresponding to the sign of the difference to determine the torque adjustment gradient value corresponding to the difference in the gradient value list corresponding to the sign of the difference.

3. The vehicle torque control method according to claim 2, wherein

   the corresponding relationships between difference ranges and gradient values in the gradient value list are fixed data; or
   the corresponding relationships between difference ranges and gradient values in the gradient value list are dynamically adjusted based on a torque control strategy during historical driving processes of the electric vehicle.

4. The vehicle torque control method according to claim 1, wherein acquiring the demanded driving torque value of the electric vehicle at the second moment by adjusting the actual output torque value of the electric vehicle at the first moment based on the torque adjustment gradient value comprises:

   in a case where a wheel speed of the electric vehicle fluctuates downward, determining a sum of the torque adjustment gradient value and a demanded torque value at the first moment as the demanded driving torque value of the electric vehicle at the second moment; and
   in a case where the wheel speed of the electric vehicle fluctuates upward, determining a difference between the demanded torque value at the first moment and the torque adjustment gradient value as the demanded driving torque value of the electric vehicle at the second moment.

5. The vehicle torque control method according to claim 1, wherein acquiring the demanded driving torque value of the electric vehicle at the second moment by adjusting the actual output torque value of the electric vehicle at the first moment based on the torque adjustment gradient value comprises:

in a case where a wheel speed of the electric vehicle fluctuates downward, determining a sum of the torque adjustment gradient value and the actual output torque value of the electric vehicle at the first moment as the demanded driving torque value of the electric vehicle at the second moment; and
in a case where the wheel speed of the electric vehicle fluctuates upward, determining a difference between the actual output torque value of the electric vehicle at the first moment and the torque adjustment gradient value as the demanded driving torque value of the electric vehicle at the second moment.

6. The vehicle torque control method according to claim 4 or 5, wherein

in a case where a wheel speed of the electric vehicle at the second moment is greater than a wheel speed of the electric vehicle at the first moment, the wheel speed of the electric vehicle fluctuates upward; or
in a case where a wheel speed of the electric vehicle at the second moment is less than a wheel speed of the electric vehicle at the first moment, the wheel speed of the electric vehicle fluctuates downward.

7. The vehicle torque control method according to any one of claims 1 to 5, wherein acquiring the actual output torque value of the electric vehicle at the first moment comprises:

receiving the actual output torque value of the electric vehicle at the first moment from a torque sensor of the electric vehicle; or
determining the actual output torque value of the electric vehicle at the first moment based on a theoretical output torque value of the electric vehicle at the first moment and a transmission efficiency.

8. The vehicle torque control method according to claim 7, further comprising:

acquiring an engine power and an engine speed of the electric vehicle at the first moment; and
determining the theoretical output torque value of the electric vehicle at the first moment based on the engine power and the engine speed.

9. The vehicle torque control method according to claim 7, further comprising:

acquiring an intake manifold pressure, an engine displacement, and an engine speed of the electric vehicle at the first moment; and
determining the theoretical output torque value of the electric vehicle at the first moment based on the intake manifold pressure, the engine displacement, and the engine speed.

10. A vehicle torque control apparatus, comprising:

a first determination module, configured to acquire, during driving of an electric vehicle, an actual output torque value of the electric vehicle at a first moment;
a calculation module, configured to calculate a difference between the actual output torque value and a limited torque value of the electric vehicle;
a second determination module, configured to determine a torque adjustment gradient value based on the difference; and
an adjustment module, configured to acquire a demanded driving torque value of the electric vehicle at a second moment by adjusting the actual output torque value of the electric vehicle based on the torque adjustment gradient value, wherein the second moment is later than and adjacent to the first moment.

11. The vehicle torque control apparatus according to claim 10, wherein the first determination module comprises:

a first sub-module, configured to search for the torque adjustment gradient value corresponding to the difference in a gradient value list, wherein the gradient value list comprises corresponding relationships between difference ranges and gradient values; or

a second sub-module, configured to determine a sign of the difference; and search a gradient value list corresponding to the sign of the difference, to determine the torque adjustment gradient value corresponding to the difference in the gradient value list corresponding to the sign of the difference.

12. The vehicle torque control apparatus according to claim 11, wherein

the corresponding relationships between difference ranges and gradient values in the gradient value list are fixed data; or

the corresponding relationships between difference ranges and gradient values in the gradient value list are dynamically adjusted based on a torque control strategy during historical driving processes of the electric vehicle.

13. The vehicle torque control apparatus according to claim 10, wherein the adjustment module comprises:

a third sub-module, configured to: in a case where a wheel speed of the electric vehicle fluctuates downward, determine a sum of the torque adjustment gradient value and a demanded torque value at the first moment as the demanded driving torque value of the electric vehicle at the second moment; and

a fourth sub-module, configured to: in a case where the wheel speed of the electric vehicle fluctuates upward, determine a difference between the demanded torque value at the first moment and the torque adjustment gradient value as the demanded driving torque value of the electric vehicle at the second moment.

14. The vehicle torque control apparatus according to claim 10, wherein the adjustment module comprises:

a fifth sub-module, configured to: in a case where a wheel speed of the electric vehicle fluctuates downward, determine a sum of the torque adjustment gradient value and the actual output torque value of the electric vehicle at the first moment as the demanded driving torque value of the electric vehicle at the second moment; and

a sixth sub-module, configured to: in a case where the wheel speed of the electric vehicle fluctuates upward, determine a difference between the actual output torque value of the electric vehicle at the first moment and the torque adjustment gradient value as the demanded driving torque value of the electric vehicle at the second moment.

15. The vehicle torque control apparatus according to claim 13 or 14, wherein

in a case where a wheel speed of the electric vehicle at the second moment is greater than a wheel speed of the electric vehicle at the first moment, the wheel speed of the electric vehicle fluctuates upward; or

in a case where a wheel speed of the electric vehicle at the second moment is less than a wheel speed of the electric vehicle at the first moment, the wheel speed of the electric vehicle fluctuates downward.

16. The vehicle torque control apparatus according to any one of claims 10 to 14, wherein the first determination module is configured to:

receive the actual output torque value of the electric vehicle at the first moment from a torque sensor of the electric vehicle; or

determine the actual output torque value of the electric vehicle at the first moment based on a theoretical output torque value of the electric vehicle at the first moment and a transmission efficiency.

17. The vehicle torque control apparatus according to claim 16, wherein the first determination module is further configured to:

acquire an engine power and an engine speed of the electric vehicle at the first moment; and

determine the theoretical output torque value of the electric vehicle at the first moment based on the engine power and the engine speed.

18. The vehicle torque control apparatus according to claim 16, wherein the first determination module is further configured to:

acquire an intake manifold pressure, an engine displacement, and an engine speed of the electric vehicle at the first moment; and

determine the theoretical output torque value of the electric vehicle at the first moment based on the intake manifold pressure, the engine displacement, and the engine speed.

19. A computer device, comprising: a memory, a processor, and at least one computer program stored in the memory and executable on the processor, wherein the at least one computer program, when executed by the processor, causes the computer device to perform the vehicle torque control method as defined in any one of claims 1 to 9.

20. A vehicle, comprising the computer device as defined in claim 19.

21. A computer-readable storage medium, storing at least one computer program, wherein the at least one computer program, when executed by a processor, causes the processor to perform the vehicle torque control method as defined in any one of claims 1 to 9.

22. A computer program product, storing at least one computer instruction, wherein the at least one computer instruction, when loaded and executed by a processor, causes a computer to perform the vehicle torque control method as defined in any one of claims 1 to 9.

FIG. 1

| | |
|---|---|
| Determining, during driving of an electric vehicle, an actual output torque value based on a driving state of the electric vehicle | 101 |
| Calculating a difference between the actual output torque value and a limited torque value of the vehicle | 102 |
| Determining a torque adjustment gradient value based on the difference | 103 |
| Adjusting the actual output torque value of the electric vehicle based on the torque adjustment gradient value | 104 |

FIG. 2

Torque

Unfiltered demanded torque

Limited torque value

Actual output torque

Engine
speed

t1  t2

FIG. 3

Torque

Unfiltered demanded torque

Limited torque value

Actual output torque

Engine
speed

t1  t2

FIG. 4

First determination module 401

Calculation module 402

Second determination module 403

Adjustment module 404

FIG. 5

Acquiring, during driving of an electric vehicle, an actual output torque value of the electric vehicle at a first moment — 601

Calculating a difference between the actual output torque value and a limited torque value of the electric vehicle — 602

Determining a torque adjustment gradient value based on the difference — 603

Acquiring a demanded driving torque value of the electric vehicle at the second moment by adjusting the actual output torque value of the electric vehicle at the first moment based on the torque adjustment gradient value, wherein the second moment is later than and adjacent to the first moment — 604

FIG. 6

Vehicle torque control apparatus

First determination module — 701

Calculation module — 702

Second determination module — 703

Adjustment module — 704

**FIG. 7**

800

Terminal device

Processor — 801

Memory — 802

**FIG. 8**

900

Server

Processor 901

Memory 902

**FIG. 9**

## INTERNATIONAL SEARCH REPORT

| International application No. |
|---|
| **PCT/CN2025/089900** |

**A. CLASSIFICATION OF SUBJECT MATTER**

B60L 15/20 (2006.01)i

According to International Patent Classification (IPC) or to both national classification and IPC

**B. FIELDS SEARCHED**

Minimum documentation searched (classification system followed by classification symbols)

IPC: B60L

Documentation searched other than minimum documentation to the extent that such documents are included in the fields searched

Electronic data base consulted during the international search (name of data base and, where practicable, search terms used)

VEN; WPABS; ENTXT; ENTXTC; CNTXT; CNKI: 车辆, 电动车, 扭矩, 实际, 输出, 控制, 梯度. 第一, 第二, 时刻, vehicle, electric vehicle. EV, torque, actual, output, control, gradient, first, second, time

**C. DOCUMENTS CONSIDERED TO BE RELEVANT**

| Category* | Citation of document, with indication, where appropriate, of the relevant passages | Relevant to claim No. |
|---|---|---|
| PX | CN 118358380 A (CHERY AUTOMOBILE CO., LTD.) 19 July 2024 (2024-07-19)<br>  entire document | 1-22 |
| X | CN 107719184 A (ZHONGTONG BUS HOLDING CO., LTD.) 23 February 2018 (2018-02-23)<br>  description, paragraphs 33-59, and figures 1-3 | 1-22 |
| A | CN 113306406 A (BEIJING ELECTRIC VEHICLE CO., LTD.) 27 August 2021 (2021-08-27)<br>  entire document | 1-22 |
| A | CN 113954657 A (BEIQI FOTON MOTOR CO., LTD.) 21 January 2022 (2022-01-21)<br>  entire document | 1-22 |
| A | CN 114502415 A (ZHEJIANG GEELY HOLDING GROUP CO., LTD. et al.) 13 May 2022 (2022-05-13)<br>  entire document | 1-22 |
| A | KR 20170095581 A (HYUNDAI MOTOR CO., LTD.) 23 August 2017 (2017-08-23)<br>  entire document | 1-22 |

☐ Further documents are listed in the continuation of Box C.     ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **25 July 2025** | **01 August 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| International application No. |
| --- |
| **PCT/CN2025/089900** |

| Patent document cited in search report | | | Publication date (day/month/year) | Patent family member(s) | | | Publication date (day/month/year) |
| --- | --- | --- | --- | --- | --- | --- | --- |
| CN | 118358380 | A | 19 July 2024 | None | | | |
| CN | 107719184 | A | 23 February 2018 | None | | | |
| CN | 113306406 | A | 27 August 2021 | None | | | |
| CN | 113954657 | A | 21 January 2022 | None | | | |
| CN | 114502415 | A | 13 May 2022 | None | | | |
| KR | 20170095581 | A | 23 August 2017 | KR | 101788189 | B1 | 19 October 2017 |

Form PCT/ISA/210 (patent family annex) (July 2022)

**REFERENCES CITED IN THE DESCRIPTION**

**Patent documents cited in the description**

- CN 202410485790